# EUROPÄISCHE PATENTSCHRIFT

(11) **EP 4 294 704 B1**
(45) Veröffentlichungstag und Bekanntmachung des Hinweises auf die Patenterteilung: **08.04.2026**
(21) Anmeldenummer: 22708420.9
(22) Anmeldetag: 04.02.2022
(51) Int. Cl.: B62D 5/06

(54) **ELEKTROHYDRAULISCHE LENKUNTERSTÜTZUNGSVORRICHTUNG FÜR EIN FAHRZEUG**
ELECTROHYDRAULIC POWER STEERING DEVICE FOR A VEHICLE
DISPOSITIF DE DIRECTION ASSISTÉE ÉLECTROHYDRAULIQUE POUR VÉHICULE

(30) Priorität: 18.02.2021 DE 102021103811
(43) Veröffentlichungstag der Anmeldung: 27.12.2023
(73) Patentinhaber: KNORR-BREMSE Systeme für Nutzfahrzeuge GmbH, 80809 München (DE)
(72) Erfinder: KALTENBACH, Christian, 70195 Stuttgart (DE); LANG, Rainer, 73525 Schwäbisch Gmünd (DE); PETERREINS, Klaus, 70794 Filderstadt (DE); BARTOLE, Benjamin, 70191 Stuttgart (DE); RINK, Jonas, 70180 Stuttgart (DE)
(86) Internationale Anmeldenummer: PCT/EP2022/052757
(87) Internationale Veröffentlichungsnummer: WO 2022/175120

(56) Entgegenhaltungen:
- EP-A1- 2 731 851
- DE-A1- 102007 053 263
- DE-A1- 102011 050 164
- JP-A- 2008 273 361
- US-A1- 2011 190 986

## Beschreibung

Der vorliegende Ansatz bezieht sich auf eine elektrohydraulische Lenkunterstützungsvorrichtung für ein Fahrzeug.

Hydraulische Lenkunterstützungsvorrichtungen (HPS: Hydraulic Power Steering) für schwere Nutzfahrzeuge weisen eine Blocklenkung, eine Verrohrung, eine Pumpe für Hydrauliköl und einen Ausgleichsbehälter für Hydrauliköl auf. Die Hydraulikpumpe wird hierbei dauerhaft vom Verbrennungsmotor angetrieben. Durch ständige Umwälzung des Hydrauliköls ist dieses immer ausreichend temperiert und so wird die Blocklenkung dauerhaft durchwärmt.

Die US 2011/190986 A1 offenbart eine Lenkung für ein Fahrzeug mit einer Hydraulikpumpe und einem Motor, dessen Abwärme zur Erwärmung eines Arbeitsmediums verwendet wird.

Die JP 2008 273361 A offenbart eine Lenkung für ein Fahrzeug mit einer Hydraulikpumpe und einem Motor.

Die DE 10 2007 053263 A1 offenbart eine Lenkung für ein Fahrzeug mit einer Hydraulikpumpe und einem Motor.

Vor diesem Hintergrund ist es die Aufgabe des vorliegenden Ansatzes eine verbesserte elektrohydraulische Lenkunterstützungsvorrichtung für ein Fahrzeug zu schaffen.

Diese Aufgabe wird durch eine elektrohydraulische Lenkunterstützungsvorrichtung mit den Merkmalen des Vorrichtungsanspruchs 1 gelöst.

Die mit dem vorgestellten Ansatz erreichbaren Vorteile bestehen darin, dass eine elektrohydraulische Lenkunterstützungsvorrichtung geschaffen wird, welche von einem Verbrennungsmotor oder Elektromotor eines Fahrzeugs entkoppelt funktioniert, wobei dennoch eine Erwärmung des Hydrauliköls der Lenkunterstützungsvorrichtung stattfindet.

Eine elektrohydraulische Lenkunterstützungsvorrichtung für ein Fahrzeug weist eine Hydraulikpumpe, einen Antrieb, eine erste Arbeitsleitung, eine zweite Arbeitsleitung und eine Wärmeübertragereinheit auf. Die Hydraulikpumpe ist ausgebildet, um in einer ersten Drehrichtung ein Hydrauliköl zu einem ersten Pumpenausgang der Hydraulikpumpe zu pumpen und in einer zweiten Drehrichtung zu einem zweiten Pumpenausgang der Hydraulikpumpe zu pumpen. Der Antrieb ist mit der Hydraulikpumpe gekoppelt und dazu ausgebildet, um die Hydraulikpumpe wahlweise in der ersten Drehrichtung oder zweiten Drehrichtung anzutreiben. Die erste Arbeitsleitung ist dazu ausgeformt, um den ersten Pumpenausgang fluidisch mit einer ersten Arbeitskammer zu verbinden, wobei die erste Arbeitskammer zum Bewegen eines mit einer Lenkstange einer Lenkung koppelbaren Kolbens in eine erste Richtung geeignet ist. Die zweite Arbeitsleitung ist dazu ausgeformt, um den zweiten Pumpenausgang fluidisch mit einer zweiten Arbeitskammer zu verbinden, wobei die zweite Arbeitskammer zum Bewegen des mit der Lenkstange der Lenkung koppelbaren Kolbens in eine der ersten Richtung entgegengesetzte zweite Richtung geeignet ist. Die Wärmeübertragereinheit ist dazu ausgebildet, um im Betrieb des Antriebs erzeugte Wärme an zumindest eine der Arbeitsleitungen zu übertragen, um das durch die Arbeitsleitung strömende Hydrauliköl zu erwärmen.

Diese elektrohydraulische Lenkunterstützungsvorrichtung ist für eine Fahrzeuglenkung in Nutzfahrzeugen, beispielsweise mit einer Achslast von bis zu acht Tonnen, einsetzbar. Die Lenkunterstützungsvorrichtung ist mit einer sogenannten "EPS"(Electronic Power Steering)-Lenkunterstützungsvorrichtung basierend auf einem elektrohydraulischen Prinzip ausgerüstet. Eine solche EPS-Lenkung ist gekennzeichnet durch ein diskontinuierliches Betriebsverhalten, d. h., das im Hydraulikkreislauf der Lenkung befindliche Hydrauliköl wird nur bei Lenkbewegungen von einer Pumpeneinheit gefördert, also nach dem Prinzip "Power on Demand". Wird nicht gelenkt, verbleibt das Hydrauliköl in Ruhe, ebenso die Motor-Pumpeneinheit aus Hydraulikpumpe und Antrieb. Diese Art von Lenkunterstützungsvorrichtung kann angewendet werden, um als "Power on Demand"-Lenksystem zu fungieren, z. B. in elektrifizierten Nutzfahrzeugen ohne Verbrennungsmotor, oder um automatisierte Fahranforderungen, z. B. durch Fahrerassistenzsysteme wie DAS/ADAS (Level 1 - 2) und HAD (Level 3 - 5) selbstständig ohne Fahrereingriff umzusetzen. Durch eine diskontinuierliche Ölforderung und damit verbundener Auskühlung des Hydrauliköls ist ein Vorwärmen des Hydrauliköls erforderlich. Die hier vorgestellte elektrohydraulische Lenkunterstützungsvorrichtung ist daher dank der Wärmeübertragereinheit vorteilhafterweise in der Lage, eine von dem Antrieb erzeugte Abwärme zur Erwärmung des Hydrauliköls zu nutzen.

Die Wärmeübertragereinheit kann eine Heizeinrichtung zum Erwärmen des durch die zumindest eine Arbeitsleitung strömenden Hydrauliköls aufweisen. Dies schafft eine Möglichkeit zur aktiven Beheizung des Hydrauliköls. Die Heizeinrichtung kann zur Beheizung der Arbeitsleitung mit dieser direkt kontaktiert sein oder aber in einen Innenraum der Arbeitsleitung hineinragen, um das Hydrauliköl selbst direkt zu beheizen. Die Hydraulikpumpe ist als eine bidirektionale Hydraulikpumpe ausgeformt. Somit ist ein Pumpen/Saugen des Hydrauliköls in zwei Richtungen ermöglicht, je nach angeforderter Lenkunterstützung.

Gemäß einer Ausführungsform kann die Lenkunterstützungsvorrichtung auch die Lenkung mit der Lenkstange, dem Kolben, der ersten Arbeitskammer und der zweiten Arbeitskammer aufweisen. Bei der Lenkung kann es sich um eine Blocklenkung handeln. Somit ist ein vollumfängliches Lenksystem geschaffen. Die Blocklenkung kann ferner mit einem Lenkrad koppelbar ausgeformt sein.

Die erste Arbeitskammer und die zweite Arbeitskammer sind mittels eines schaltbaren Ventils, beispielsweise einem Magnetventil, miteinander fluidisch verbunden oder verbindbar ausgeformt. So wird ein durchgängiger Hydraulikölkreislauf geschaffen, der eine Erwärmung im gesamten Kreislaufes auch mit nur einer Wärmeübertragereinheit ermöglicht.

Die erste Arbeitsleitung kann an zumindest einer Antriebsseite des Antriebs um den Antrieb herum verlaufend angeordnet sein und zusätzlich oder alternativ die zweite Arbeitsleitung an einer der Antriebsseite gegenüberliegenden Antriebsseite um den Antrieb herum verlaufend angeordnet sein. So ist eine ideale Wärmeübertragung von dem Antrieb auf die nahe gelegene/n Arbeitsleitung/en gewährleistet. Der Antrieb kann eine Radialflussmaschine umfassen.

Es ist weiterhin von Vorteil, wenn die Lenkunterstützungsvorrichtung gemäß einer Ausführungsform ein Motorgehäuse aufweist, in dem der Antrieb und zusätzlich oder alternativ die Hydraulikpumpe aufgenommen ist. Das Motorgehäuse kann idealerweise ein wärmeleitfähiges Material aufweisen. So ist eine Wärmeübertragung über das Material auf die zumindest eine Arbeitsleitung begünstigt.

Die Wärmeübertragereinheit kann außerhalb des Motorgehäuses angeordnet sein. Eine Aufnahme der Wärmeübertragereinheit in das Motorgehäuse ist in diesem Fall nicht notwendig. Alternativ ist die Wärmeübertragereinheit im Motorgehäuse integriert. Dadurch kann eine kompakte Bauform und eine hohe Wärmeübertragung erreicht werden.

Ausführungsbeispiele des hier vorgestellten Ansatzes werden in der nachfolgenden Beschreibung mit Bezug zu den Figuren näher erläutert. Es zeigen:
Fig. 1 eine schematische Darstellung eines Fahrzeugs mit einer elektrohydraulischen Lenkunterstützungsvorrichtung gemäß einem Ausführungsbeispiel; und
Fig. 2 eine perspektivische Darstellung einer elektrohydraulischen Lenkunterstützungsvorrichtung gemäß einem Ausführungsbeispiel.

In der nachfolgenden Beschreibung günstiger Ausführungsbeispiele des vorliegenden Ansatzes werden für die in den verschiedenen Figuren dargestellten und ähnlich wirkenden Elemente gleiche oder ähnliche Bezugszeichen verwendet, wobei auf eine wiederholte Beschreibung dieser Elemente verzichtet wird.

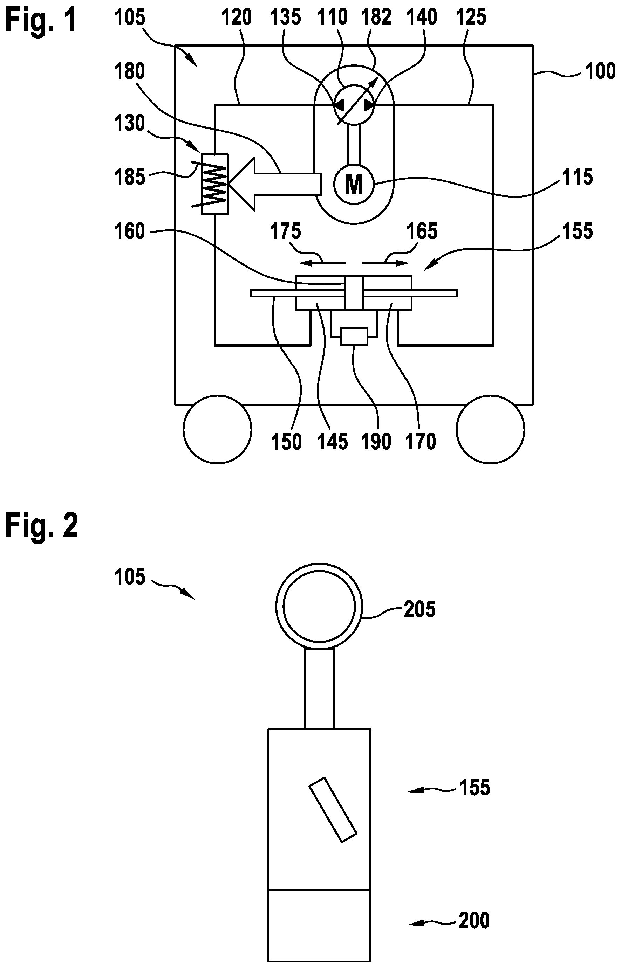

**Fig. 1** zeigt eine schematische Darstellung eines Fahrzeugs 100 mit einer elektrohydraulischen Lenkunterstützungsvorrichtung 105 gemäß einem Ausführungsbeispiel.

Lediglich beispielhaft ist die elektrohydraulische Lenkunterstützungsvorrichtung 105 gemäß diesem Ausführungsbeispiel an oder in dem Fahrzeug 100 aufgenommen, das gemäß diesem Ausführungsbeispiel als ein Nutzfahrzeug, beispielsweise mit einer Achslast von bis zu acht Tonnen, ausgeformt ist. Es handelt sich bei dem Fahrzeug 100 gemäß einem Ausführungsbeispiel um ein elektrifiziertes oder hochautomatisiert fahrbares Fahrzeug 100.

Die elektrohydraulische Lenkunterstützungsvorrichtung 105 weist eine Hydraulikpumpe 110, einen Antrieb 115, eine erste Arbeitsleitung 120, eine zweite Arbeitsleitung 125 und eine Wärmeübertragereinheit 130 auf. Die Hydraulikpumpe 110 ist ausgebildet, um in einer ersten Drehrichtung ein Hydrauliköl zu einem ersten Pumpenausgang 135 der Hydraulikpumpe 110 zu pumpen und in einer zweiten Drehrichtung zu einem zweiten Pumpenausgang 140 der Hydraulikpumpe 110 zu pumpen. Es handelt sich bei der Hydraulikpumpe 110 somit um eine Pumpe mit einstellbarem Volumenstrom. Der Antrieb 115 ist mit der Hydraulikpumpe 110 gekoppelt und dazu ausgebildet, um die Hydraulikpumpe 110 wahlweise in der ersten Drehrichtung oder zweiten Drehrichtung anzutreiben. Die erste Arbeitsleitung 120 ist dazu ausgeformt, um den ersten Pumpenausgang 135 fluidisch mit einer ersten Arbeitskammer 145 zu verbinden, wobei die erste Arbeitskammer 145 zum Bewegen eines mit einer Lenkstange 150 einer Lenkung 155 koppelbaren Kolbens 160 in eine erste Richtung 165 geeignet ist. Die zweite Arbeitsleitung 125 ist dazu ausgeformt, um den zweiten Pumpenausgang 140 fluidisch mit einer zweiten Arbeitskammer 170 zu verbinden, wobei die zweite Arbeitskammer 170 zum Bewegen des mit der Lenkstange 150 der Lenkung 155 koppelbaren Kolbens 160 in eine der ersten Richtung 165 entgegengesetzte zweite Richtung 175 geeignet ist. Die Wärmeübertragereinheit 130 ist dazu ausgebildet, um im Betrieb des Antriebs 115 erzeugte Wärme 180 an zumindest eine der Arbeitsleitungen 120, 125 zu übertragen, um das durch die Arbeitsleitung 120, 125 strömende Hydrauliköl zu erwärmen.

Gemäß diesem Ausführungsbeispiel umfasst die Lenkunterstützungsvorrichtung 105 ferner auch die Lenkung 155 mit der Lenkstange 150, dem Kolben 160, der ersten Arbeitskammer 145 und der zweiten Arbeitskammer 170 und/oder ein Motorgehäuse 182. Bei der Lenkung 155 handelt es sich gemäß diesem Ausführungsbeispiel um eine Blocklenkung. In dem Motorgehäuse 182 sind gemäß diesem Ausführungsbeispiel der Antrieb 115 und/oder die Hydraulikpumpe 110 aufgenommen. Das Motorgehäuse 182 weist gemäß diesem Ausführungsbeispiel ein wärmeleitfähiges Material auf. Die Wärmeübertragereinheit 130 ist gemäß einem Ausführungsbeispiel außerhalb des Motorgehäuses 182 angeordnet. Alternativ ist die Wärmeübertragereinheit 130 innerhalb des Motorgehäuses 182 angeordnet, beispielsweise in das Motorgehäuse 182 integriert. Die Wärmeübertragereinheit 130 weist gemäß diesem Ausführungsbeispiel optional eine Heizeinrichtung 185 zum Erwärmen des durch die zumindest eine Arbeitsleitung 120, 125 strömenden Hydrauliköls auf. Die Heizeinrichtung 185 ist gemäß diesem Ausführungsbeispiel in oder an der ersten Arbeitsleitung 120 oder um die erste Arbeitsleitung 120 herum kontaktiert. Die Wärmeübertragereinheit 130 ist gemäß diesem Ausführungsbeispiel auf Höhe des Antriebs 115 angeordnet. Beispielsweise ist die Wärmeübertragereinheit 130 direkt oder über eine Wärmebrücke zur Wärmeleitung mit dem Motorgehäuse 182 verbunden. Gemäß einem Ausführungsbeispiel ist die Wärmeübertragereinheit 130 in das Motorgehäuse 182 integriert.

Die erste Arbeitskammer 145 und die zweite Arbeitskammer 170 sind gemäß diesem Ausführungsbeispiel mittels eines schaltbaren Ventils 190, hier beispielhaft einem Magnetventil, miteinander fluidisch verbunden oder verbindbar ausgeformt. Die erste Arbeitsleitung 120 ist gemäß diesem Ausführungsbeispiel an zumindest einer Antriebsseite des Antriebs 115 um den Antrieb 115 herum verlaufend angeordnet und/oder die zweite Arbeitsleitung 125 an einer der Antriebsseite gegenüberliegenden Antriebsseite um den Antrieb 115 herum verlaufend angeordnet. Der Antrieb 115 umfasst gemäß diesem Ausführungsbeispiel eine Radialflussmaschine.

Die hier vorgestellte Lenkunterstützungsvorrichtung 105 weist vorteilhafterweise eine interne Erwärmungseinheit für ein elektrohydraulisches "Electronic Power Steering"-Lenkgetriebe, kurz "EPS-Lenkgetriebe" auf.

Die EPS-Lenkunterstützungsvorrichtung 105 verfolgt einen vollintegralen Plug-and-Play-Ansatz. Hierbei ist der hydraulische Ölkreislauf von einem Fahrzeugantrieb wie einem Verbrennungsmotor oder Elektromotor des Fahrzeugs 100 entkoppelt und als kompakte Antriebseinheit an die Blocklenkung angebracht, siehe hierzu auch Fig. 2.

Durch eine diskontinuierliche Ölforderung und damit verbundener Auskühlung des Hydrauliköls in der Antriebseinheit der EPS-Lenkunterstützungsvorrichtung ist es notwendig, das Hydrauliköl vorzuwärmen. Das vorgewärmte Hydrauliköl wird in der hier vorgestellten Lenkunterstützungsvorrichtung 105 vorteilhafterweise verteilt und durchwärmt diese gleichmäßig. Durch den hier beschriebenen Ansatz wird die erzeugte Wärmeenergie direkt in das Hydrauliköl übertragen. Dies wird in einer kompletten Volumenstrom- und Druckbandbreite ermöglicht, gemäß diesem Ausführungsbeispiel in einer Volumenstrombandbreite von 0 bis 16 l/min und/oder einer Druckbandbreite von 0 bis 180 bar. Die Erwärmung des Hydrauliköls ist essentiell für eine gleichbleibende Systemsteifigkeit sowie ein damit verbundenes Lenkgefühl.

Als Wärmequelle dient in der Antriebseinheit der Antrieb 115 der Hydraulikpumpe 110, der gemäß diesem Ausführungsbeispiel ein Antriebsmotor ist. Es handelt sich bei dem Antriebsmotor gemäß diesem Ausführungsbeispiel um einen Elektromotor, beispielhaft um eine Radialflussmaschine oder einen Radialflussmotor. Die Abwärme des Antriebs 115 wird genutzt, um das Hydrauliköl zu erwärmen. Durch die Anordnung der als Hydraulikleitungen ausgeformten Arbeitsleitungen 120, 125 räumlich getrennt um den Antrieb 115 wird im Betrieb die Abwärme direkt durch Wärmeleitung des Gehäusematerials des Antriebs 115 auf das Hydraulikmedium übertragen.

Die Lenkunterstützungsvorrichtung 105 erfüllt die Aufgabe, die erzeugte Wärme in Form von Abwärme des Antriebs 115 an das Hydrauliköl abzugeben, welches direkt in die Arbeitskammern 145, 170 der Blocklenkung fließt. Durch die Anordnung kann im Unterstützungsbetrieb die Abwärme des Motors zur Erwärmung des Öls und Durchwärmung der ganzen Lenkunterstützungsvorrichtung 105 genutzt werden.

Des Weiteren weist die Lenkunterstützungsvorrichtung 105 gemäß diesem Ausführungsbeispiel optional das schaltbare Ventil 190 auf, das beide Arbeitskammern 145, 170 der Lenkung 155 verbindet. So kann gemäß einem Ausführungsbeispiel eine Heizfunktion (Fahrzeug 100 im Stillstand aus längerer Standzeit, z. B. Abstellen nach Arbeitspause) eingesetzt werden, bei der die Spulen des Antriebs 115 als Heizelement verwendet werden. Die entstandene Wärme wird gemäß einem Ausführungsbeispiel über die hier beschriebene Lenkunterstützungsvorrichtung 105 in das Hydrauliköl eingeleitet und mit dem schaltbaren Ventil 190 im Kreis gepumpt, bis eine bestimmte Zieltemperatur erreicht ist, die das Abfahren des Fahrzeugs 100 ermöglicht.

Hier dargestellt ist schematisch ein vereinfachter hydraulischer Schaltplan einer bidirektionalen EPS-Lenkunterstützungsvorrichtung 105. Die Wärmeübertragereinheit 130 in Form einer integrierten Wärmeeinheit ist dazu ausgebildet, um die Abwärme zur Temperierung des Hydrauliköls an die erste Arbeitsleitung 120 abzugeben. Ist die erste Arbeitsleitung 120 im Druckbetrieb, wird das Hydrauliköl direkt in die erste Arbeitskammer 145 transportiert und bewegt den Kolben 160 je nach Unterstützungswunsch des Fahrers nach rechts. Im Saugbetrieb der ersten Arbeitsleitung 120 wird die Wärme an das angesaugte Öl aus der ersten Arbeitsleitung 120 abgegeben und über die zweite Arbeitsleitung 125 in die zweite Arbeitskammer 170 übertragen. In diesem Fall ist die zweite Arbeitsleitung 125 im Druckbetrieb. Der hier vorgestellte Ansatz beschreibt eine Möglichkeit, dank der Wärmeübertragereinheit 130 die Abwärme des Radialflussmotors direkt in die Arbeitsleitungen 120, 125 einzutragen. So wird das Hydrauliköl erwärmt und das Systemverhalten durch eine geringere und gleichmäßigere Ölviskosität verbessert.

**Fig. 2** zeigt eine perspektivische Darstellung einer elektrohydraulischen Lenkunterstützungsvorrichtung 105 gemäß einem Ausführungsbeispiel. Dabei kann es sich um die in Fig. 1 beschriebene Lenkunterstützungsvorrichtung 105 handeln. Die EPS-Lenkunterstützungsvorrichtung 105 verfolgt einen vollintegralen Plug-and-Play-Ansatz. Hierbei ist der hydraulische Ölkreislauf vom Verbrennungsmotor oder Elektromotor des Fahrzeugs 100 entkoppelt und als kompakte Antriebseinheit 200 an die Lenkung 155 in Form der Blocklenkung angebracht. Die Lenkung 155 ist ferner zum Koppeln mit einem Lenkrad 205 ausgeformt.

Gemäß einem Ausführungsbeispiel weist die Lenkunterstützungsvorrichtung 105 ferner eine Steuereinrichtung auf, die dazu ausgebildet ist, um ansprechend auf ein Lenkbetätigungssignal, das eine Betätigung des Lenkrads 205 repräsentiert, ein Aktivierungssignal auszugeben, das dazu ausgebildet ist, um den Antrieb und/oder die Hydraulikpumpe zu aktivieren und/oder ansprechend auf ein Lenkruhesignal, das einen Ruhezustand des Lenkrads 194 repräsentiert, ein Deaktivierungssignal auszugeben, das dazu ausgebildet ist, um den Antrieb und/oder die Hydraulikpumpe zu deaktivieren.

### BEZUGSZEICHENLISTE

- 100: Fahrzeug
- 105: elektrohydraulische Lenkunterstützungsvorrichtung
- 110: Hydraulikpumpe
- 115: Antrieb
- 120: erste Arbeitsleitung
- 125: zweite Arbeitsleitung
- 130: Wärmeübertragereinheit
- 135: erster Pumpenausgang
- 140: zweiter Pumpenausgang
- 145: erste Arbeitskammer
- 150: Lenkstange
- 155: Lenkung
- 160: Kolben
- 165: erste Richtung
- 170: zweite Arbeitskammer
- 175: zweite Richtung
- 180: Wärme
- 182: Motorgehäuse
- 185: Heizeinrichtung
- 190: Ventil

- 200: Antriebseinheit
- 205: Lenkrad

## Patentansprüche

1. Elektrohydraulische Lenkunterstützungsvorrichtung (105) für ein Fahrzeug (100), wobei die Lenkunterstützungsvorrichtung (105) die folgenden Merkmale aufweist:
eine bidirektionale Hydraulikpumpe (110), die ausgebildet ist, um in einer ersten Drehrichtung ein Hydrauliköl zu einem ersten Pumpenausgang (135) der Hydraulikpumpe (110) zu pumpen und in einer zweiten Drehrichtung zu einem zweiten Pumpenausgang (140) der Hydraulikpumpe (110) zu pumpen,
einen mit der Hydraulikpumpe (110) gekoppelten Antrieb (115), der dazu ausgebildet ist, um die Hydraulikpumpe (110) wahlweise in der ersten Drehrichtung oder zweiten Drehrichtung anzutreiben,
eine erste Arbeitsleitung (120), die dazu ausgeformt ist, um den ersten Pumpenausgang (135) fluidisch mit einer ersten Arbeitskammer (145) zu verbinden,
wobei die erste Arbeitskammer (145) zum Bewegen eines mit einer Lenkstange (150) einer Lenkung (155) koppelbaren Kolbens (160) in eine erste Richtung (165) geeignet ist,
eine zweite Arbeitsleitung (125), die dazu ausgeformt ist, um den zweiten Pumpenausgang (140) fluidisch mit einer zweiten Arbeitskammer (170) zu verbinden,
wobei die zweite Arbeitskammer (170) zum Bewegen des mit der Lenkstange (150) der Lenkung (155) koppelbaren Kolbens (160) in eine der ersten Richtung (165) entgegengesetzte zweite Richtung (175) geeignet ist, und
eine Wärmeübertragereinheit (130), die dazu ausgebildet ist, um im Betrieb des Antriebs (115) erzeugte Wärme (180) an zumindest eine der Arbeitsleitungen (120, 125) zu übertragen, um das durch die Arbeitsleitung (120, 125) strömende Hydrauliköl zu erwärmen, wobei die erste Arbeitskammer (145) und die zweite Arbeitskammer (170) mittels eines schaltbaren Ventils (190) miteinander fluidisch verbindbar ausgeformt sind,
**dadurch gekennzeichnet, dass**
das Ventil (190) in einem Kreislauf, der die Arbeitsleitungen (120, 125), Arbeitskammern (145, 170) und das Ventil (190) umfasst, angeordnet ist, um eine Erwärmung im gesamten Kreislauf nur mit der Wärmeübertragereinheit (130) zu ermöglichen.

2. Lenkunterstützungsvorrichtung (105) gemäß Anspruch 1, bei der die Wärmeübertragereinheit (130) eine Heizeinrichtung (185) zum Erwärmen des durch die zumindest eine Arbeitsleitung (120, 125) strömenden Hydrauliköls aufweist.

3. Lenkunterstützungsvorrichtung (105) gemäß einem der vorangegangenen Ansprüche, mit der Lenkung (155) mit der Lenkstange (150), dem Kolben (160), der ersten Arbeitskammer (145) und der zweiten Arbeitskammer (170).

4. Lenkunterstützungsvorrichtung (105) gemäß einem der vorangegangenen Ansprüche, bei der die erste Arbeitsleitung (120) an zumindest einer Antriebsseite des Antriebs (115) um den Antrieb (115) herum verlaufend angeordnet ist und/oder die zweite Arbeitsleitung (125) an einer der Antriebsseite gegenüberliegenden Antriebsseite des Antriebs (115) um den Antrieb (115) herum verlaufend angeordnet ist.

5. Lenkunterstützungsvorrichtung (105) gemäß einem der vorangegangenen Ansprüche, mit einem Motorgehäuse (182), in dem der Antrieb (115) und/oder die Hydraulikpumpe (110) aufgenommen ist.

6. Lenkunterstützungsvorrichtung (105) gemäß Anspruch 5, bei der das Motorgehäuse (182) ein wärmeleitfähiges Material aufweist.

7. Lenkunterstützungsvorrichtung (105) gemäß einem der Ansprüche 5 oder 6, bei der die Wärmeübertragereinheit (130) im Motorgehäuse (182) integriert angeordnet ist.

8. Lenkunterstützungsvorrichtung (105) gemäß einem der vorangegangenen Ansprüche, bei der der Antrieb (115) eine Radialflussmaschine umfasst.

## Claims

1. Electrohydraulic steering assistance device (105) for a vehicle (100), wherein the steering assistance device (105) has the following features:
a bidirectional hydraulic pump (110) which is constructed to pump a hydraulic oil in a first rotation direction to a first pump outlet (135) of the hydraulic pump (110) and in a second rotation direction to a second pump outlet (140) of the hydraulic pump (110),
a drive (115) which is coupled to the hydraulic pump (110) and which is constructed to drive the hydraulic pump (110) selectively in the first rotation direction or second rotation direction,
a first working line (120) which is formed to fluidically connect the first pump outlet (135) to a first working chamber (145), wherein the first working chamber (145) is suitable for moving a piston (160) which can be coupled to a steering rod (150) of a steering system (155) in a first direction (165),
a second working line (125) which is formed to fluidically connect the second pump outlet (140) to a second working chamber (170), wherein the second working chamber (170) is suitable for moving the piston (160) which can be coupled to the steering rod (150) of the steering system (155) in a second direction (175) opposed to the first direction (165), and
a heat transmission unit (130) which is constructed to transmit heat (180) generated during operation of the drive (115) to at least one of the working lines (120, 125) in order to heat the hydraulic oil flowing through the working line (120, 125), wherein the first working chamber (145) and the second working chamber (170) are formed to be able to be fluidically connected to each other by means of a switchable valve (190),
**characterized in that**
the valve (190) is arranged in a circuit which comprises the working lines (120, 125), working chambers (145, 170) and the valve (190) in order to enable heating in the entire circuit only with the heat transmission unit (130).

2. Steering assistance device (105) according to claim 1, in which the heat transmission unit (130) has a heating apparatus (185) for heating the hydraulic oil flowing through the at least one working line (120, 125).

3. Steering assistance device (105) according to any one of the preceding claims, having the steering system (155) with the steering rod (150), the piston (160), the first working chamber (145) and the second working chamber (170).

4. Steering assistance device (105) according to any one of the preceding claims, in which the first working line (120) is arranged at least at one driving side of the drive (115) so as to extend around the drive (115) and/or the second drive line (125) is arranged at a drive side of the drive (115) opposite the drive side so as extend around the drive (115).

5. Steering assistance device (105) according to any one of the preceding claims, with a motor housing (182), in which the drive (115) and/or the hydraulic pump (110) is received.

6. Steering assistance device (105) according to claim 5, in which the motor housing (182) has a heat-conducting material.

7. Steering assistance device (105) according to either claim 5 or 6, in which the heat transmission unit (130) is arranged in a state integrated in the motor housing (182).

8. Steering assistance device (105) according to any one of the preceding claims, in which the drive (115) comprises a radial flux motor.

## Revendications

1. Dispositif de direction assistée (105) électrohydraulique pour un véhicule (100), dans lequel le dispositif de direction assistée (105) présente les caractéristiques suivantes :
une pompe hydraulique (110) bidirectionnelle qui est formée afin de pomper dans un premier sens de rotation une huile hydraulique vers une première sortie de pompe (135) de la pompe hydraulique (110) et de la pomper dans un second sens de rotation vers une seconde sortie de pompe (140) de la pompe hydraulique (110),
un entraînement (115) couplé à la pompe hydraulique (110) qui est formé afin d'entraîner la pompe hydraulique (110) au choix dans le premier sens de rotation ou second sens de rotation,
une première conduite de travail (120) qui est formée afin de relier la première sortie de pompe (135) de manière fluidique à une première chambre de travail (145), dans lequel la première chambre de travail (145) est appropriée au déplacement d'un piston (160) couplable à une bielle (150) d'une direction (155) dans un premier sens (165),
une seconde conduite de travail (125) qui est formée afin de relier la seconde sortie de pompe (140) de manière fluidique à une seconde chambre de travail (170), dans lequel la seconde chambre de travail (170) est appropriée au déplacement du piston (160) couplable à la bielle (150) de la direction (155) dans un second sens (175) opposé au premier sens (165), et
une unité d'échange de chaleur (130) qui est formée afin de transmettre de la chaleur (180) générée en fonctionnement de l'entraînement (115) à au moins une des conduites de travail (120, 125) afin de chauffer l'huile hydraulique circulant par la conduite de travail (120, 125), dans lequel la première chambre de travail (145) et la seconde chambre de travail (170) sont formées au moyen d'une soupape (190) commutable de manière reliable fluidiquement entre elles,
**caractérisé en ce que**
la soupape (190) est agencée dans un circuit qui comprend les conduites de travail (120, 125), les chambres de travail (145, 170) et la soupape (190) afin de permettre un chauffage dans le circuit entier seulement avec l'unité d'échange de chaleur (130).

2. Dispositif de direction assistée (105) selon la revendication 1, pour lequel l'unité d'échange de chaleur (130) présente un dispositif de chauffage (185) pour le chauffage de l'huile hydraulique circulant par l'au moins une conduite de travail (120, 125).

3. Dispositif de direction assistée (105) selon l'une quelconque des revendications précédentes, avec la direction (155) avec la bielle de direction (150), le piston (160), la première chambre de travail (145) et la seconde chambre de travail (170).

4. Dispositif de direction assistée (105) selon l'une quelconque des revendications précédentes, pour lequel la première conduite de travail (120) est agencée s'étendant sur au moins un côté de l'entraînement (115) autour de l'entraînement (115) et/ou la seconde conduite de travail (125) est agencée s'étendant sur un côté d'entraînement opposé au côté de l'entraînement (115) autour de l'entraînement (115).

5. Dispositif de direction assistée (105) selon l'une quelconque des revendications précédentes, avec un carter de moteur (182), dans lequel l'entraînement (115) et/ou la pompe hydraulique (110) est reçue.

6. Dispositif de direction assistée (105) selon la revendication 5, pour lequel le carter de moteur (182) présente un matériau thermoconducteur.

7. Dispositif de direction assistée (105) selon l'une quelconque des revendications 5 ou 6, pour lequel l'unité d'échange de chaleur (130) est agencée de manière intégrée dans le carter de moteur (182).

8. Dispositif de direction assistée (105) selon l'une quelconque des revendications précédentes, pour lequel l'entraînement (115) comprend une machine à flux radial.
